# EUROPEAN PATENT APPLICATION

(11) **EP 2 700 515 A1**
(43) Date of publication of application: **26.02.2014**
(21) Application number: 11863754.5
(22) Date of filing: 26.09.2011
(51) Int. Cl.: B60C 27/04, B60C 27/06

(54) **ANTISKID DEVICE FOR TIRE**

(30) Priority: 21.04.2011 JP 2011094695
(71) Applicant: Sakakibara, Kouichi, Hashima-shi, Gifu 501-6335 (JP)
(72) Inventor: Sakakibara, Kouichi, Hashima-shi, Gifu 501-6335 (JP)
(74) Representative: Kuhnen & Wacker
(86) International application number: PCT/JP2011/071815
(87) International publication number: WO 2012/144093

(57) **Abstract**

In an anti-skid device of fit-in type, the work for attachment to and detachment from a tire of a car is simplified. Two or more anti-skid bodies 1a to 1c with a U-shaped cross-section to be fitted therein with a tire of a car are connected by one or more connecting members 5 to form a belt form. The anti-skid bodies at both ends of the belt are attached thereto with a pair of connecting components 21, 22. When being attached to the tire, the anti-skid bodies in the belt form are put on the upper part of the tire and fitted therein with the tire, the anti-skid bodies at both ends of the belt are suspended from both sides of the tire, and the pair of connecting components of the anti-skid bodies at both sides of the tire is connected thereby to form the anti-skid bodies in the belt form into a loop. When being detached from the tire, the pair of connecting components is disconnected from each other to form the anti-skid bodies into a belt form.

## Description

### [Technical Field]

The present invention relates to an anti-skid device to be attached to a tire for cars.

### [Background Art]

Anti-skid devices for tires exemplified in Patent Literature are fit-in type of anti-skid bodies. Anti-skid bodies having U-shaped cross-section are fitted therein with a tire of a car. Two or more anti-skid bodies are arranged at regular intervals along the entire circumference of the tire, and each anti-skid body is connected with the next one. The two or more anti-skid bodies are attached to the tire in a circular fashion. When the anti-skid device is detached from the tire, each anti-skid body is disconnected from the next one, and the anti-skid bodies are released from the tire.

Each anti-skid body comprises a front-side U-shaped member and a rear-side U-shaped member respectively located at the front-side and the rear-side with respect to the rotation direction of the tire when the car moves forward, and an interior-side linear-shaped member located along the inside surface of the tire. Each of the front-side and the rear-side U-shaped members has a crossing part crossing the ground contact surface of the tire, an exterior part located along the outside surface of the tire, and an interior part located along the inside surface of the tire. The interior-side linear-shaped member connects the interior parts of the front-side and the rear-side U-shaped members with each other. The anti-skid body with the U-shaped cross-section is such that the crossing parts of the front-side and the rear-side U-shaped members constitute crossing parts which cross the ground contact surface of the tire. In addition, the anti-skid body with the U-shaped cross-section is such that the exterior parts of the front-side and the rear-side U-shaped members constitute exterior parts which are arranged along the outside surface of the tire. The interior parts of the front-side and the rear-side U-shaped members and the interior-side linear-shaped member constitute interior parts which are arranged along the inside surface of the tire.

The exterior parts of the anti-skid body are attached thereto with respective connecting components at the front-side and the rear-side in the circumference direction of the tire. When connecting the anti-skid bodies arranged in the circumference direction of the tire, the rear-side connecting component of one anti-skid body and the front-side connecting component of the next anti-skid body are connected in a separable manner with each other.

### [Citation List]

### [Patent Literature]

[PTL 1]
   Japanese Patent No. 3557464
[PTL 2]
   Japanese Patent No. 3718779
[PTL 3]
   Japanese Unexamined Patent Application Publication No. 2007-290627

### [Summary of Invention]

### [Technical Problem]

### [Problems]

The anti-skid device for tires as described above has the same number of connecting component pairs as the anti-skid bodies. If, for example, three anti-skid bodies are present, then three pairs of connecting components are present for connecting them. When the anti-skid device is attached to a tire, all of the connecting components are sequentially connected. This causes several times of connecting operations for the connecting components.

The work for attachment to a tire is desired to be easy. The same is true for detachment from the tire.

### [Original ideas]

In an anti-skid device of fit-in type, two or more anti-skid bodies are to be connected by one or more connecting members to form a belt form, and the anti-skid bodies at both ends of the belt are to be attached thereto with a pair of connecting components.

When being attached to a tire, the two or more anti-skid bodies in the belt form are put on the upper part of the tire and fitted therein with the tire, and the anti-skid bodies at both ends of the belt are suspended from both sides of the tire. The pair of connecting components of the anti-skid bodies at both sides of the tire is connected. The two or more anti-skid bodies in the belt form are attached to the tire in the shape of a loop. One time of connecting operation for the connecting components is allowed.

When being detached from the tire, the pair of connecting components is disconnected from each other. The two or more anti-skid bodies having been in the loop become to be in a belt form. The two or more anti-skid bodies in the belt form are detached from the tire. One time of disconnecting operation for the connecting components is allowed.

### [Solution to Problem]

1. In a fit-in type anti-skid device for tires, configured such that two or more anti-skid bodies having a U-shaped cross-section are fitted therein with a tire of a car and arranged in circumferential direction of the tire:
   the two or more anti-skid bodies with the U-shaped cross-section are connected by one or more connecting members to form a belt form;
   the anti-skid bodies at both ends of the belt are attached thereto with a pair of connecting components;
   the anti-skid device is configured such that, when being attached to the tire, the two or more anti-skid bodies in the belt form are put on upper part of the tire and fitted therein with the tire, the anti-skid bodies at both ends of the belt are suspended from both sides of the tire, and the pair of connecting components of the anti-skid bodies at both sides of the tire is connected thereby to form the anti-skid bodies in the belt form into a loop; and
   the anti-skid device is configured such that, when being detached from the tire, the pair of connecting components is disconnected from each other to form the two or more anti-skid bodies having been in the loop into a belt form.
2. In the anti-skid device for tires of the above 1:
   the anti-skid bodies have exterior parts arranged along an outside surface of the tire; and
   the pair of connecting components is attached to the exterior part of the anti-skid body at a leading end of the belt and the exterior part of the anti-skid body at a trailing end of the belt.
3. In the anti-skid device for tires of the above 1 or 2:
   the pair of connecting components comprises a tube-like connecting component and a rod-like connecting component to be inserted into a center hole of the tube-like connecting component.
4. In the anti-skid device for tires of the above 1, 2 or 3:
   the anti-skid bodies have exterior parts arranged along an outside surface of the tire;
   each of the connecting members is a linear-shaped connecting member; and the linear-shaped connecting member connects the exterior part of front-side anti-skid body and the exterior part of rear-side anti-skid body.
5. In the anti-skid device for tires of either one of the above 1 to 4:
   each anti-skid body comprises a front-side U-shaped member and a rear-side U-shaped member respectively located at a front-side and a rear-side with respect to a rotation direction of the tire when a car moves forward and an interior-side linear-shaped member located along an inside surface of the tire; each of the front-side and the rear-side U-shaped members has an exterior part located along an outside surface of the tire and an interior part located along the inside surface of the tire; the interior-side linear-shaped member connects the interior part of the front-side U-shaped member and the interior part of the rear-side U-shaped member;
   each of the connecting members connects the exterior part of the rear-side U-shaped member of front-side anti-skid body and the exterior part of the front-side U-shaped member of rear-side anti-skid body; and
   the pair of connecting components is attached to the exterior part of the front-side U-shaped member of the anti-skid body at a leading end of the belt and the exterior part of the rear-side U-shaped member of the anti-skid body at a trailing end of the belt.
6. In the anti-skid device for tires of either one of the above 1 to 5:
   the anti-skid bodies comprise two, three or four anti-skid bodies.

### [Advantageous Effects of Invention]

When the fit-in type anti-skid device is attached to and detached from a tire, the operation of connecting components becomes easy.

### [Brief Description of Drawings]

[Fig. 1]

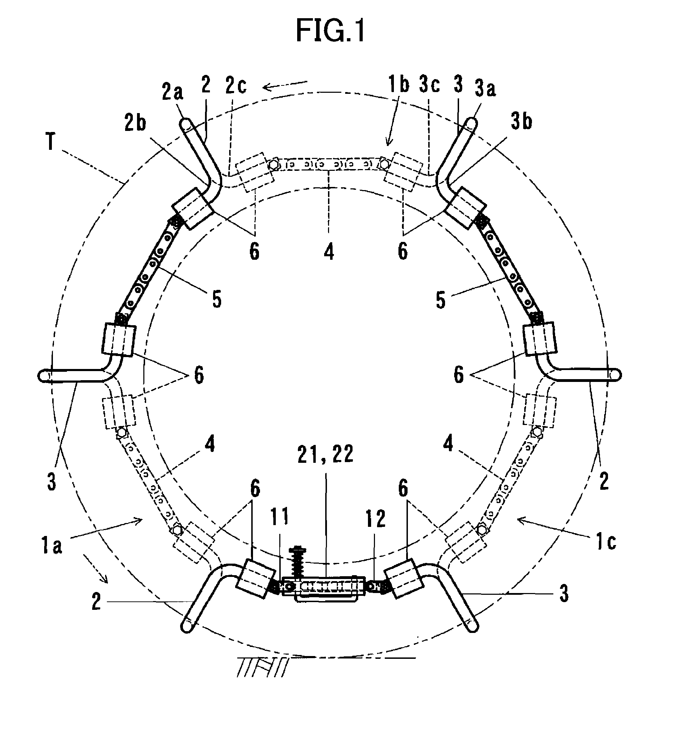

   Fig. 1 is a front elevational view of a state where an anti-skid device for tires in a first example according to embodiments of the present invention is attached to a tire.
[Fig. 2]

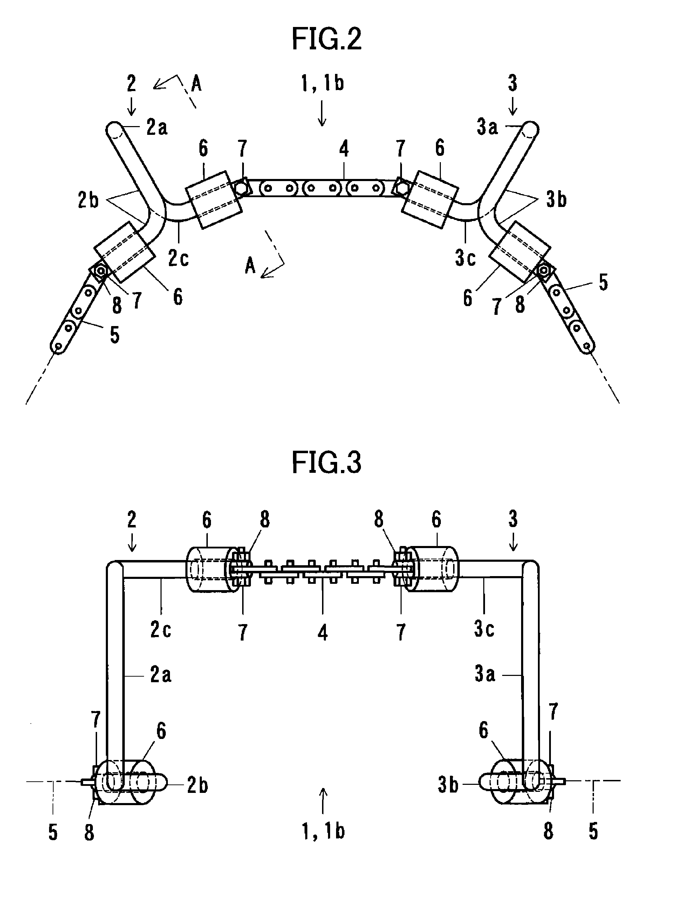

   Fig. 2 is an enlarged front elevational view of a second anti-skid body shown in Fig. 1.
[Fig. 3]
   Fig. 3 is an enlarged plan view of the second anti-skid body.
[Fig. 4]

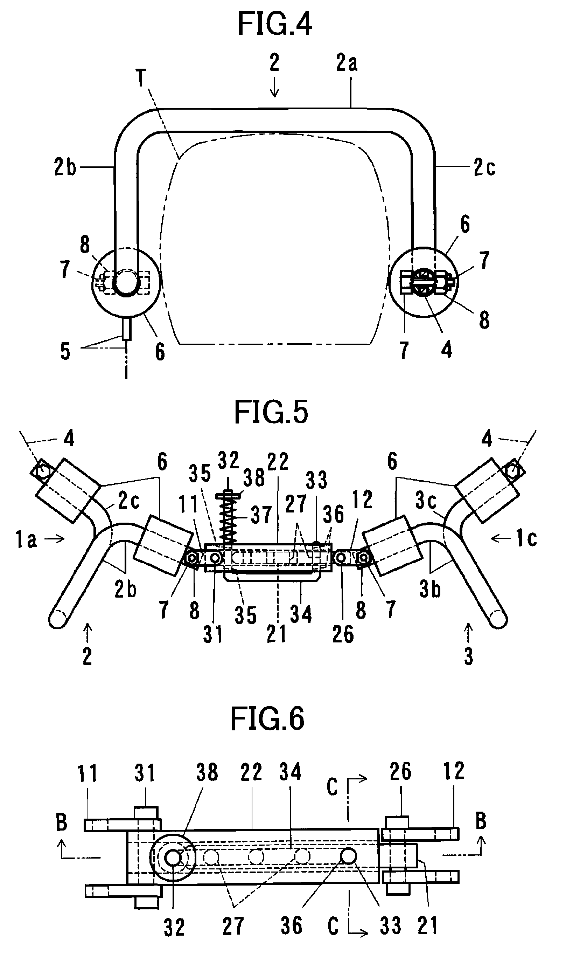

   Fig. 4 is an enlarged cross-sectional view along line A-A in Fig. 2.
[Fig. 5]
   Fig. 5 is an enlarged front elevational view of a connecting component portion between a first anti-skid body and a third anti-skid body shown in Fig. 1.
[Fig. 6]
   Fig. 6 is an enlarged plan view of the connecting components.
[Fig. 7]

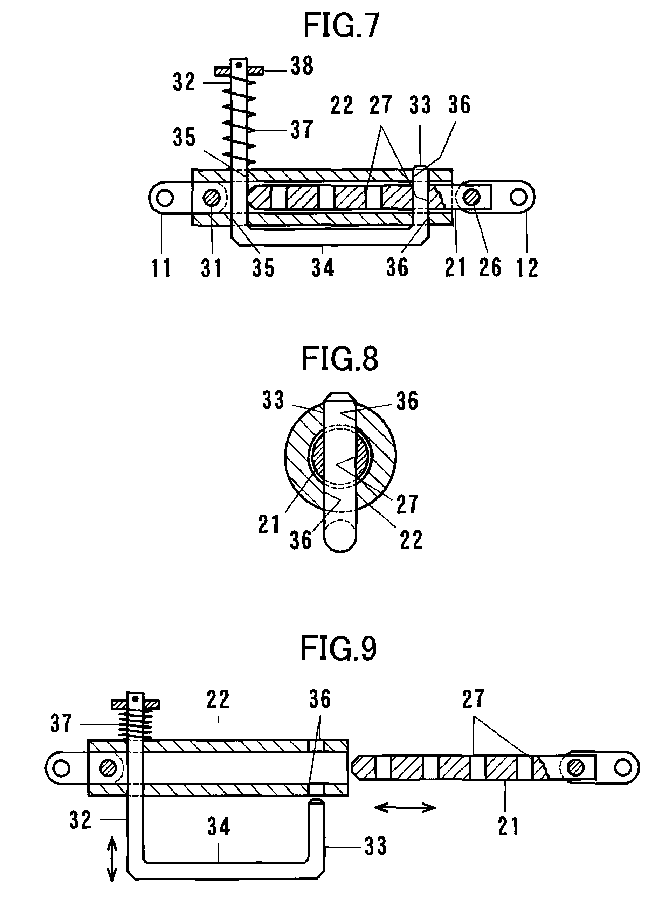

   Fig. 7 is a cross-sectional view along line B-B in Fig. 6.
[Fig. 8]
   Fig. 8 is an enlarged cross-sectional view along line C-C in Fig. 6.
[Fig. 9]
   Fig. 9 is a cross-sectional view like Fig. 7 and illustrates a state where a manipulation member of the connecting components is caused to move forward so that a rod-like connecting component is pulled out from a tube-like connecting component.
[Fig. 10]

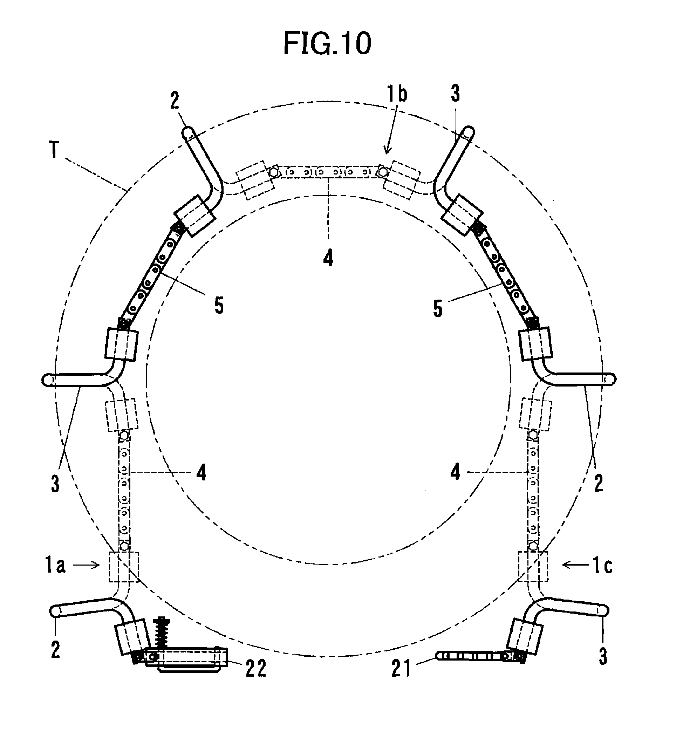

   Fig. 10 is a front elevational view of a midway state when the anti-skid device is attached to a tire and a midway state when the anti-skid device is detached from the tire.
[Fig. 11]

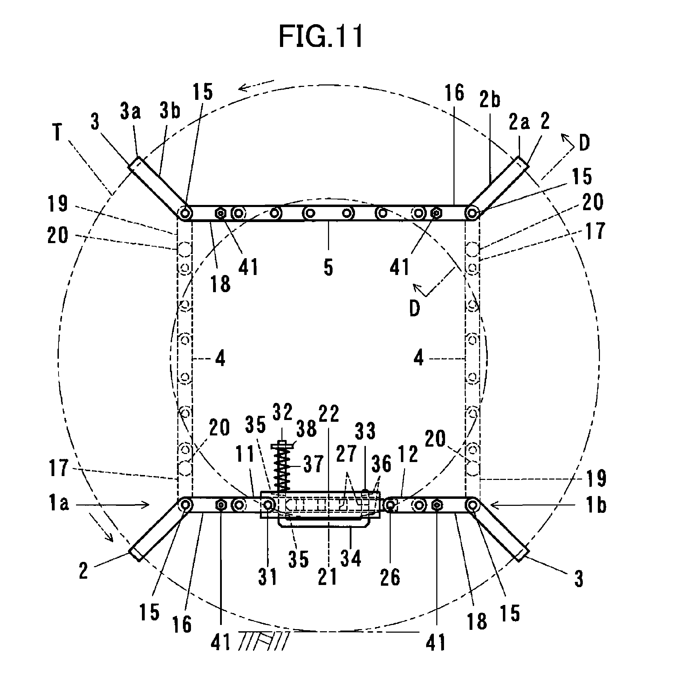

   Fig. 11 is a front elevational view of a state where an anti-skid device for tires in a second example according to the embodiments is attached to a tire.
[Fig. 12]

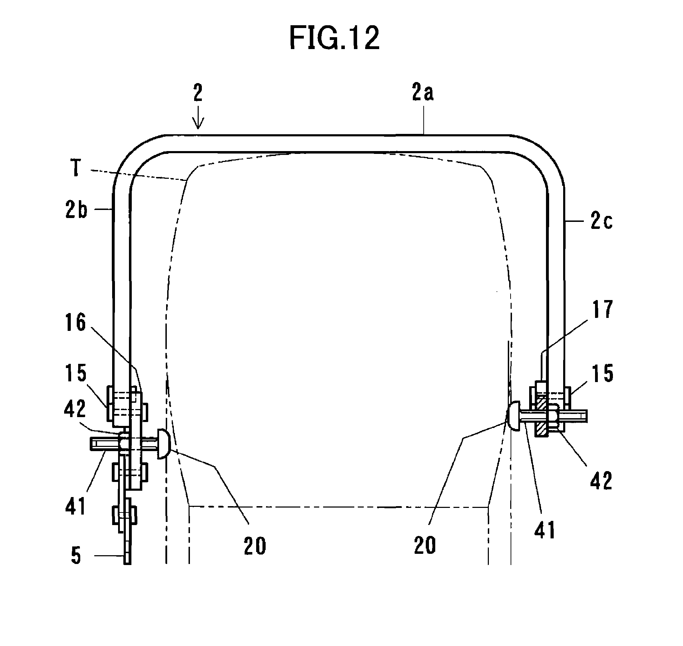

   Fig. 12 is an enlarged cross-sectional view along line D-D in Fig. 11.

### [Description of Embodiments]

### [First example (refer to Fig. 1 to Fig. 10)]

Referring to Fig. 1, a front elevational view of an anti-skid device for tires according to the present example is shown where a state that the anti-skid device is attached to a tire T of a car is viewed from the exterior of the car. Parts to be of the exterior of the car are shown by solid lines while parts to be of the interior of the car are shown by broken lines. This anti-skid device is configured such that a first anti-skid body 1a, a second anti-skid body 1b, and a third anti-skid body 1c (individually denoted herein, and collectively anti-skid body or bodies 1) are arranged at regular intervals in a circumference direction of the tire T in this order from the front side in the positive rotation direction of the tire T as shown by an arrow in Fig. 1 when the car moves forward.

The first anti-skid body 1a and the second anti-skid body 1b are connected by a connecting member 5. The second anti-skid body 1b and the third anti-skid body 1c are also connected by a connecting member 5. Each of the connecting members 5 is formed in a linear shape and provided as a chain. These three anti-skid bodies 1a, 1b, and 1c are connected in a belt form.

The front-side of the first anti-skid body 1a at the leading end of the belt is attached thereto with a tube-like connecting component 22 via a front-side connecting member 11. The rear-side of the third anti-skid body 1c at the trailing end of the belt is attached thereto with a rod-like connecting component 21 via a rear-side connecting member 12. The rod-like connecting component 21 and the tube-like connecting component 22 constitute a pair of connecting components 21 and 22.

Three anti-skid bodies 1a, 1b, and 1c are made as the same structure. Accordingly, the second anti-skid body 1b will representatively be described. The second anti-skid body 1, 1b comprises a front-side U-shaped member 2, a rear-side U-shaped member 3, and an interior-side linear-shaped member 4, as shown in Fig. 1 to Fig. 3.

The front-side and the rear-side U-shaped members 2 and 3 are formed in a spatially symmetrical structure in which round rods are curved into U shapes for being fitted therein with the outer circumference side of the tire T. The U-shaped members 2 and 3 have crossing parts 2a and 3a that cross the tread area (ground contact area) of the tire T, exterior parts 2b and 3b that are along the outside surface of the tire T, and interior parts 2c and 3c that are along the inside surface of the tire T. The front-side and the rear-side U-shaped members 2 and 3 are to be fitted therein with the tire T to make a center angle of about 60 degrees.

The front-side U-shaped member 2 is configured such that the exterior part 2b is mainly located along the radial direction of the tire T and an end portion of the exterior part 2b is bent and extends toward the front-side. The front-side extending portion of the exterior part 2b is located along the circumferential direction of the tire T. The front-side U-shaped member 2 is further configured such that the interior part 2c is mainly located along the radial direction of the tire T and an end portion of the interior part 2c is bent and extends toward the rear-side. The rear-side extending portion of the interior part 2c is located along the circumferential direction of the tire T.

The rear-side U-shaped member 3 is configured such that the exterior part 3b is mainly located along the radial direction of the tire T and an end portion of the exterior part 3b is bent and extends toward the rear-side. The rear-side extending portion of the exterior part 3b is located along the circumferential direction of the tire T. The rear-side U-shaped member 3 is further configured such that the interior part 3c is mainly located along the radial direction of the tire T and an end portion of the interior part 3c is bent and extends toward the front-side. The front-side extending portion of the interior part 3c is located along the circumferential direction of the tire T.

The interior-side linear-shaped member 4 is provided as a chain. This chain 4 comprises plural plate-like links that are connected with one another by pins into a string-shape so as to be pivotally movable relative to one another. Thus, the interior-side linear-shaped member 4 is provided as a leaf chain. As shown in Fig. 3 and Fig. 4, the leading end of the interior-side linear-shaped member 4 is attached to an end of the interior part 2c of the front-side U-shaped member 2 by means of a bolt 7 and a nut 8. Like the leading end, the trailing end of the interior-side linear-shaped member 4 is also attached to an end of the interior part 3c of the rear-side U-shaped member 3 by means of a bolt 7 and a nut 8. These bolts 7 are arranged along the axial direction of the tire T.

The anti-skid body 1 is configured to have a U-shaped cross-section for being fitted therein with the tire T. The anti-skid body 1 having the U-shaped cross-section, in particular the crossing parts 2a and 3a of the front-side and the rear-side U-shaped members 2 and 3, constitute the crossing parts which cross the ground contact surface of the tire T. Further, the anti-skid body 1, in particular the exterior parts 2b and 3b of the front-side and the rear-side U-shaped members 2 and 3, constitute the exterior parts which are along the outside surface of the tire T. Furthermore, the anti-skid body 1, in particular the interior parts 2c and 3c of the front-side and the rear-side U-shaped members 2 and 3 and the interior-side linear-shaped member 4, constitute the interior parts which are along the inside surface of the tire T.

As shown in Fig. 1 to Fig. 3, the front-side U-shaped member 2 is attached thereto with two contact members 6 each having a tubular shape so that one contact member 6 is inserted therein with the front-side extending portion of the exterior part 2b and the other contact member 6 is inserted therein with the rear-side extending portion of the interior part 2c. In addition, the rear-side U-shaped member 3 is also attached thereto with two contact members 6 each having a tubular shape so that one contact member 6 is inserted therein with the rear-side extending portion of the exterior part 3b and the other contact member 6 is inserted therein with the front-side extending portion of the interior part 3c. The tubular contact members 6 are arranged along the circumferential direction of the tire T. Each contact member 6 is made of elastic material such as rubber, and has a hollow cylindrical shape. Exterior contact members 6 are configured to contact with the outside surface of the tire T. Interior contact members 6 are configured to contact with the inside surface of the tire T. In addition, the exterior contact members 6 and the interior contact members 6 are configured to contact with an inner area of the outside surface and an inner area of the inside surface, respectively, of the tire T. Each tubular contact member 6 is rotatable around the axis thereof.

The connecting member 5 between the first anti-skid body 1a and the second anti-skid body 1b is provided as a leaf chain like the linear-shaped member 4. The leading end of this connecting member 5 is attached to an end of the exterior part 3b of the rear-side U-shaped member 3 of the first anti-skid body 1a by means of a bolt 7 and a nut 8. Like the leading end, the trailing end of the connecting member 5 is also attached to an end of the exterior part 2b of the front-side U-shaped member 2 of the second anti-skid body 1b by means of a bolt 7 and a nut 8. The connecting member 5 between the second anti-skid body 1b and the third anti-skid body 1c is attached thereto in a similar manner.

As shown in Fig. 1 and Fig. 5, the first anti-skid body 1a is such that the leading end of the exterior part 2b of the front-side U-shaped member 2 is attached thereto with the front-side connecting member 11 by means of a bolt 7 and a nut 8. The front-side connecting member 11 is provided as a plate-like link of a chain, and made pivotally movable around the bold 7 along the axial direction of the tire T. The leading end of the front-side connecting member 11 is attached thereto with the tube-like connecting component 22.

The third anti-skid body 1c is such that the end of the exterior part 3b of the rear-side U-shaped member 3 is attached thereto with the rear-side connecting member 12 by means of a bolt 7 and a nut 8. The rear-side connecting member 12 is provided as a plate-like link of a chain, and made pivotally movable around the bold 7 along the axial direction of the tire T. The trailing end of the rear-side connecting member 12 is attached thereto with the rod-like connecting component 21.

Details of the rod-like connecting component 21 and the tube-like connecting component 22 will be described with reference to Fig. 5 to Fig. 9.

The rod-like connecting component 21 has a round rod shape and an attaching end thereof is attached to the trailing end of the rear-side connecting member 12 using a pin 26. The pin 26 is disposed along the axial direction of the tire T. The rod-like connecting component 21 is pivotally movable around the pin 26. Plural connecting holes 27 are formed in the rod-like connecting component 21 of the round rod shape to pass therethrough in the radially crossing direction. The plural connecting holes 27 are arranged at regular intervals along the longitudinal direction of the rod-like connecting component 21. Each connecting hole 27 is provided substantially along the radial direction of the tire T.

The tube-like connecting component 22 has a hollow cylindrical shape and an attaching end thereof is attached to the leading end of the front-side connecting member 11 using a pin 31. The pin 31 is disposed along the axial direction of the tire T. The tube-like connecting component 22 is pivotally movable around the pin 31. The tube-like connecting component 22 has a center hole into which the rod-like connecting component 21 can be inserted from an opening of the end of the center hole.

A manipulation member is attached to the tube-like connecting component 22. The manipulation member is configured such that an attaching rod 32 and a connecting rod 33 arranged in parallel with each other are connected by a manipulation rod 34, thus having a hook shape. The attaching rod 32 is longer than the connecting rod 33. This manipulation member (32, 33, 34) is produced by folding one round rod.

A pair of attaching holes 35 and a pair of connecting holes 36 are formed in the tube-like connecting component 22 to pass therethrough in the crossing direction. The attaching holes 35 are located at the attaching end side of the tube-like connecting component 22 while the connecting holes 36 are located at the free end side of the tube-like connecting component 22. The attaching holes 35 and the connecting holes 36 are formed substantially along the radial direction of the tire T.

The manipulating member is set up so that the attaching rod 32 is inserted into the attaching holes 35 of the tube-like connecting component 22 and the connecting rod 33 is inserted into the connecting holes 36 of the tube-like connecting component 22. The manipulation rod 34 is parallel to the tube-like connecting component 22 and disposed at the opposite side to the center of the tire T. The manipulation member (32, 33, 34) is movable in the crossing direction of the tube-like connecting component 22. When the manipulation rod 34 is caused to move forward away from the tube-like connecting component 22, the connecting rod 33 is pulled out from the connecting holes 36 while the attaching rod 32 remains inserted in the attaching holes 35. When the manipulation rod 34 is caused to move backward to come close the tube-like connecting component 22, the connecting rod 33 is inserted into the connecting holes 36 to cross the center hole of the tube-like connecting component 22.

The attaching rod 32 is set up so that the end side portion thereof extends from the tube-like connecting component 22 toward the opposite side to the manipulation rod 34 and is inserted into a spiral spring 37, and a spring retainer 38 is in turn attached to the end of the attaching rod 32. The spiral spring 37 is interposed between the tube-like connecting component 22 and the spring retainer 38. This spiral spring 37 constitutes an elastic member for applying a backward movement force to the manipulation member (32, 33, 34).

When the rod-like connecting component 21 and the tube-like connecting component 22 are connected with each other, the manipulation member is caused to move forward against the spiral spring 37 as the elastic member by pulling the manipulation rod 34 using hand or pushing the end of the attaching rod 32. The connecting rod 33 is evacuated from the center hole of the tube-like connecting component 22, as shown in Fig. 9. In the evacuated state of the connecting rod 33, the rod-like connecting component 21 is fitted into the center hole of the tube-like connecting component 22. The manipulation member is then caused to move backward by the elastic force of the elastic member 37. As shown in Fig. 7 and Fig. 8, the connecting rod 33 is inserted into the connecting holes 36 of the tube-like connecting component and one of the connecting holes 27 of the rod-like connecting component. This allows the rod-like connecting component 21 and the tube-like connecting component 22 to connect with each other.

If the connecting rod 33 is inserted into a connecting hole 27 located near the free end side of the rod-like connecting component 21 when the connecting rod 33 is inserted into one of the connecting holes 27 of the rod-like connecting component, then the connected total length of the rod-like connecting component 21 and the tube-like connecting component 22 becomes long. If the connecting rod 33 is inserted into a connecting hole 27 located near the attaching end side of the rod-like connecting component 21, then the connected total length of the rod-like connecting component 21 and the tube-like connecting component 22 becomes short. The connecting hole 27 to be inserted therein with the connecting rod 33 is selected depending on the outer diameter or the outer circumferential length of the tire T.

When the rod-like connecting component 21 and the tube-like connecting component 22 are disconnected from each other, the manipulation member is caused to move forward against the elastic member 37 by pulling the manipulation rod 34 using hand or pushing the end of the attaching rod 32. The connecting rod 33 is pulled out from the connecting holes 36 of the tube-like connecting component and the connecting hole 27 of the rod-like connecting component. The rod-like connecting component 21 is then pulled out from the tube-like connecting component 22, as shown in Fig. 9. This allows the rod-like connecting component 21 and the tube-like connecting component 22 to be disconnected from each other.

When the anti-skid device for tires according to the present example is attached to the tire T of a car, as shown in Fig. 10, the first anti-skid body 1a, the second anti-skid body 1b, and the third anti-skid body 1c in the belt form are put on the upper part of the tire T and engaged therewith. The second anti-skid body 1b is put on the upper part of the tire and fitted therein with the tire T. The rear portion of the first anti-skid body 1a is fitted therein with the left-side part of the tire T, and the front portion of the first anti-skid body 1a is suspended from the left-side of the tire T. The front portion of the third anti-skid body 1c is fitted therein with the right-side part of the tire T, and the rear portion of the third anti-skid body 1c is suspended from the right-side of the tire T. Thereafter, the tube-like connecting component 22 at the front-side of the first anti-skid body 1a and the rod-like connecting component 21 at the rear-side of the third anti-skid body 1c are connected. This allows the anti-skid bodies 1a to 1c in the belt form to be formed into a loop thereby being attached to the tire T.

When the anti-skid device is detached from the tire T, the rod-like connecting component 21 and the tube-like connecting component 22 are disconnected from each other. The anti-skid bodies 1a to 1c having been in the loop return to the belt form, as shown in Fig. 10. This allows the anti-skid bodies 1a to 1c to be detached from the tire T.

### [Second example (refer to Fig. 11 and Fig. 12)]

An anti-skid device for tires according to the present example comprises two anti-skid bodies 1, i.e. a first anti-skid body 1a and a second anti-skid body 1b, as shown in Fig. 11 and Fig. 12. The anti-skid bodies 1a and 1b are modified in regard to the structure of front-side U-shaped members 2 and rear-side U-shaped members 3.

The front-side U-shaped members 2 and the rear-side U-shaped members 3 are each configured such that a belt-like square bar is curved into a U-shape.

Exterior part 2b of each front-side U-shaped member 2 is attached thereto with a front-side extending member 16 by a pin 15 rather than being formed with the front-side extending portion in the first example. Interior part 2c is attached thereto with a rear-side extending member 17 by a pin 15 rather than being formed with the rear-side extending portion in the first example. The front-side extending member 16 and the rear-side extending member 17 are pivotally movable around respective pins 15 along the axial direction of the tire T.

Exterior part 3b of each rear-side U-shaped member 3 is attached thereto with a rear-side extending member 18 by a pin 15 rather than being formed with the rear-side extending portion in the first example. Interior part 3c is attached thereto with a front-side extending member 19 by a pin 15 rather than being formed with the front-side extending portion in the first example. The rear-side extending member 18 and the front-side extending member 19 are pivotally movable around respective pins 15 along the axial direction of the tire T.

The front-side extending members 16 and the rear-side extending members 18 are provided with respective contact members 20 to contact with the outside surface of the tire T. The rear-side extending members 17 and the front-side extending members 19 are provided with respective contact members 20 to contact with the inside surface of the tire T. These contact members 20 employ the same attaching structure. The structure where a front-side extending member 16 is attached thereto with the corresponding contact member 20 will be described with reference to Fig. 12. The front-side extending member 16 has a threaded hole passing therethrough, in which a screw shaft 41 is screwed. The screw shaft 41 penetrates the front-side extending member 16 along the axial direction of the tire T. The inner end of the screw shaft 41 is fixed thereto with a disc-shaped contact member 20 in a concentric fashion. The outer end side portion of the screw shaft 41 is screwed into a locknut 42. The contact member 20 is thus configured such that the locating position thereof can be adjusted in the axial direction of the tire T.

Interior-side linear-shaped members 4 are attached between the rear-side extending members 17 and the front-side extending members 19 like in the first example. Linear-shaped connecting member 5 is attached between the rear-side extending member 18 of the first anti-skid body 1a and the front-side extending member 16 of the second anti-skid body 1b like in the first example. The first anti-skid body 1a and the second anti-skid body 1b are connected in a belt form.

Leading end of the front-side extending member 16 of the first anti-skid body 1a is attached thereto with a tube-like connecting component 22 via a front-side connecting member 11 like in the first example. Trailing end of the rear-side extending member 18 of the second anti-skid body 1b is attached thereto with a rod-like connecting component 21 via a rear-side connecting member 12 like in the first example.

When the anti-skid device for tires according to the present example is attached to the tire T, the first anti-skid body 1a and the second anti-skid body 1b in the belt form are put on the upper part of the tire T and engaged therewith. The rear portion of the first anti-skid body 1a is fitted therein with the upper part of the tire T at the left-side, and the front portion of the first anti-skid body 1a is suspended from the lower-left-side of the tire T. The front portion of the second anti-skid body 1b is fitted therein with the upper part of the tire T at the right-side, and the rear portion of the second anti-skid body 1b is suspended from the lower-right-side of the tire T. The tube-like connecting component 22 at the front-side of the first anti-skid body 1a and the rod-like connecting component 21 at the rear-side of the second anti-skid body 1b are connected. This allows the anti-skid bodies 1a and 1b in the belt form to be formed into a loop thereby being attached to the tire T.

When the anti-skid device is detached from the tire T, the rod-like connecting component 21 and the tube-like connecting component 22 are disconnected from each other. The anti-skid bodies 1a and 1b having been in the loop return to the belt form. This allows the anti-skid bodies 1a and 1b to be detached from the tire T.

Other features are the same as those in the first example. Like parts in the drawings are denoted by the same reference numerals as those in the first example.

### [Examples in modification]

1. In the above embodiments, the anti-skid bodies 1 comprise three or two bodies, but may also comprise four or more bodies.
2. In the above embodiments, the interior-side linear-shaped member 4 and the linear-shaped connecting member 5 are each made as a chain, but each may also be made as a wire rope or a steel wire.
3. In the above embodiments, the rod-like connecting component 21 and the tube-like connecting component 22 are respectively attached to the anti-skid body at the trailing end of the belt or the anti-skid body at the leading end of the belt via the rear-side connecting member 12 or the front-side connecting member 11, but may also be directly attached thereto without the rear-side connecting member 12 or the front-side connecting member 11.
4. In the above embodiments, the anti-skid body at the leading end of the belt is attached thereto with the tube-like connecting component 22 while the anti-skid body at the trailing end of the belt is attached thereto with the rod-like connecting component 21, but in contrast, the anti-skid body at the leading end of the belt may be attached thereto with the rod-like connecting component 21 while the anti-skid body at the trailing end of the belt may be attached thereto with the tube-like connecting component 22.
5. In the above embodiments, the connecting components comprise the rod-like connecting component 21 and the tube-like connecting component 22, but may also comprise connecting components with another structure.

### [Industrial Applicability]

The anti-skid device for tires according to the present invention can be applied to the usage for various cars, such as small size, middle size, or large size passenger cars or motor trucks.

### [Reference Signs List]

T; tire for cars
1, 1a-1c; anti-skid body
1a; first anti-skid body
1b; second anti-skid body
1c; third anti-skid body
2; front-side U-shaped member
2a; crossing part
2b; exterior part
2c; interior part
3; rear-side U-shaped member
3a; crossing part
3b; exterior part
3c; interior part
4; interior-side linear-shaped member
2a, 3a; crossing part of anti-skid body
2b, 3b; exterior part of anti-skid body
2c, 3c, 4; interior part of anti-skid body
5; connecting member, linear-shaped connecting member
6; contact member having tubular shape
7; bolt
8; nut
11; front-side connecting member
12; rear-side connecting member
15; pin
16; front-side extending member
17; rear-side extending member
18; rear-side extending member
19; front-side extending member
20; disc-shaped contact member
21, 22; connecting component, pair of connecting components
21; rod-like connecting component
22; tube-like connecting component
26; pin
27; connecting hole
31; pin
32, 33, 34; manipulation member
32; attaching rod
33; connecting rod
34; manipulation rod
35; attaching hole
36; connecting hole
37; spiral spring, elastic member
38; spring retainer
41; screw shaft
42; locknut

## Claims

1. A fit-in type anti-skid device for tires, configured such that two or more anti-skid bodies having a U-shaped cross-section are fitted therein with a tire of a car and arranged in circumferential direction of the tire, **characterized in that**
the two or more anti-skid bodies with the U-shaped cross-section are connected by one or more connecting members to form a belt form,
the anti-skid bodies at both ends of the belt are attached thereto with a pair of connecting components,
the anti-skid device is configured such that, when being attached to the tire, the two or
more anti-skid bodies in the belt form are put on upper part of the tire and fitted therein with the tire, the anti-skid bodies at both ends of the belt are suspended from both sides of the tire, and the pair of connecting components of the anti-skid bodies at both sides of the tire is connected thereby to form the anti-skid bodies in the belt form into a loop,
and
the anti-skid device is configured such that, when being detached from the tire, the pair of connecting components is disconnected from each other to form the two or more anti-skid bodies having been in the loop into a belt form.

2. The anti-skid device for tires as set forth in claim 1, **characterized in that** the anti-skid bodies have exterior parts arranged along an outside surface of the tire, and
the pair of connecting components is attached to the exterior part of the anti-skid body at a leading end of the belt and the exterior part of the anti-skid body at a trailing end of the belt.

3. The anti-skid device for tires as set forth in claim 1 or 2, **characterized in that** the pair of connecting components comprises a tube-like connecting component and a rod-like connecting component to be inserted into a center hole of the tube-like connecting component.

4. The anti-skid device for tires as set forth in claim 1, 2 or 3, **characterized in that** the anti-skid bodies have exterior parts arranged along an outside surface of the tire, each of the connecting members is a linear-shaped connecting member, and the linear-shaped connecting member connects the exterior part of front-side anti-skid body and the exterior part of rear-side anti-skid body.

5. The anti-skid device for tires as set forth in either one of claims 1 to 4, **characterized in that**
each anti-skid body comprises a front-side U-shaped member and a rear-side U-shaped member respectively located at a front-side and a rear-side with respect to a rotation direction of the tire when a car moves forward and an interior-side linear-shaped member located along an inside surface of the tire, each of the front-side and the rear-side U-shaped members has an exterior part located along an outside surface of the tire and an interior part located along the inside surface of the tire, the interior-side linear-shaped member connects the interior part of the front-side U-shaped member and the interior part of the rear-side U-shaped member,
each of the connecting members connects the exterior part of the rear-side U-shaped member of front-side anti-skid body and the exterior part of the front-side U-shaped member of rear-side anti-skid body, and
the pair of connecting components is attached to the exterior part of the front-side U-shaped member of the anti-skid body at a leading end of the belt and the exterior part of the rear-side U-shaped member of the anti-skid body at a trailing end of the belt.

6. The anti-skid device for tires as set forth in either one of claims 1 to 5, **characterized in that** the anti-skid bodies comprise two, three or four anti-skid bodies.
